# EUROPEAN PATENT APPLICATION

(11) **EP 4 092 607 A1**
(43) Date of publication of application: **23.11.2022**
(21) Application number: 22173400.7
(22) Date of filing: 16.05.2022
(51) Int. Cl.: G06Q 50/06, G06Q 20/34

(54) **CARBON COIN DEVICE**

(30) Priority: 17.05.2021 TW 110117787
(71) Applicant: Yao, Li-Ho, 106 Taipei City (TW)
(72) Inventor: Yao, Li-Ho, 106 Taipei City (TW)
(74) Representative: Horak, Michael

(57) **Abstract**

A carbon coin device (30) includes a device body (300) and a pricing circuit (301) arranged in the device body (300). The pricing circuit (301) at least includes a processing unit (31), a memory unit (32), a communication unit (33), and a carbon computation module (34). As such, the carbon coin device (30) is operable to calculate carbon emission of a piece of equipment (80, 90) according to power consumption data and to further calculate and provide a valuable digital token, and to generate an event of carbon coin trading.

## Description

### TECHNICAL FIELD OF THE INVENTION

The present invention relates generally to the technical field of carbon trading, and more particularly to a carbon coin device that enables an apparatus in collaboration therewith to conduct instantaneous computation of carbon emission and for conversion into and saving of a valuable digital token in order to facilitate carbon coin trading conducted by users.

### DESCRIPTION OF THE PRIOR ART

To achieve the purpose of reduce emissions of greenhouse gases, incentive measures are the generally adopted strategy. Purchase/sale of emission allowances (also referred to as carbon credit) is conducted with carbon trading, so that the total carbon emission can be effectively controlled by means of the market mechanism.

However, all the trading schemes are basically trading conducted between large-sized businesses or states. On the contrary, no carbon credit trading systems have been effectively established for medium-size or small-size businesses, or individuals, (which will be collectively referred to as "small entities" hereinafter), who generate a majority of carbon emission, because such carbon emissions are not in an economic scale. This affects people's intention for carbon reduction.

In other words, if the small entities may act for effective trading of carbon credit, the situation that carbon credit trading was considered a tool for monopoly and wealth gathering by a few large-sized businesses can be changed, allowing the small entities to take action for carbon reduction and retrieve benefit of carbon reduction, so that the greenhouse effect can be reduced more efficiently and more effectively. Thus, it is an important issue today to develop a carbon credit trading scheme for the small entities so as to allow the trading of carbon credit to be conducted under a condition of being within the system. This is what the invention attempts to probe into.

### SUMMARY OF THE INVENTION

Thus, the primary objective of the present invention is to make it possible to allow carbon credit trading to be conducted among small entities in order to encourage the small entities to take action for carbon reduction and retrieve benefit of carbon reduction for creating their economic profits.

Another objective of the present invention is to provide incentives to the small entities in order to achieve the goal of efficiently and effectively reducing emission of greenhouse gases and to effective control the total carbon emission by means of operation of market mechanisms.

A further objective of the present invention is to realize instantaneous computation of carbon emission quantity, so that general small entities may timely conduct trading of carbon coins to thereby allow the small entities to enjoy the benefit of carbon reduction and to willingly and aggressively behavior for carbon reduction.

### BRIEF DESCRIPTION OF THE DRAWINGS

FIG. 1 is a schematic view showing the present invention.
FIG. 2 is a schematic view showing architecture of a circuit of the present invention.
FIG. 3 is a schematic view showing an application in which the present invention is embodied in a mobile carrier.
FIG. 4 is a schematic view showing system architecture of the present invention applied to carbon coin trading.

### DETAILED DESCRIPTION OF THE PREFERRED EMBODIMENT

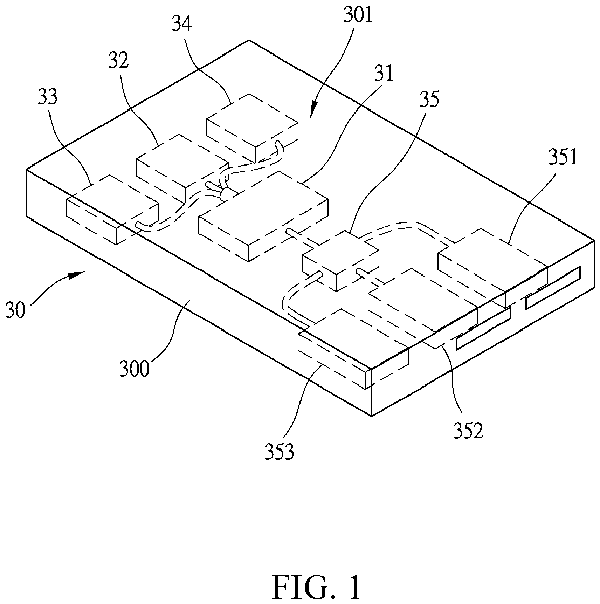

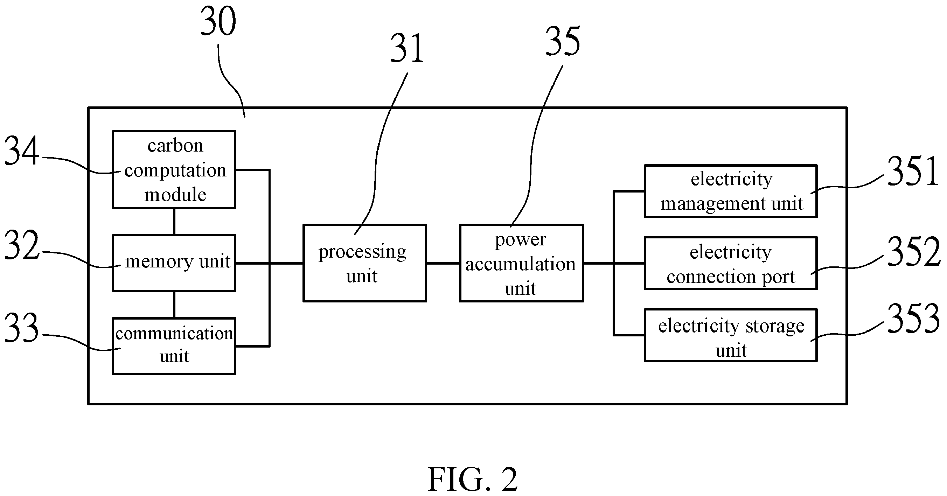

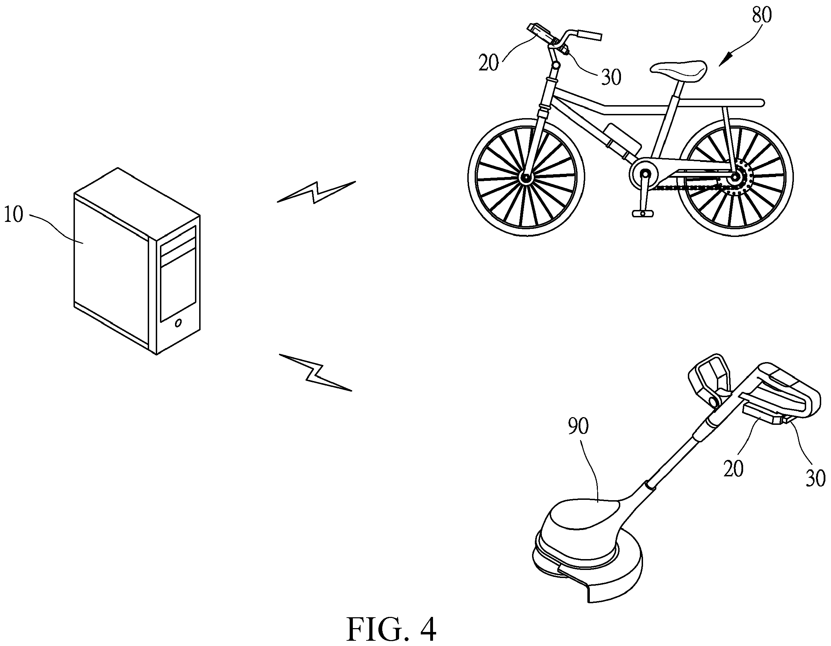

The present invention provides a carbon coin device of which structural details may be referred to FIGS. 1 and 2. The carbon coin device 30 comprises a device body 300 and a pricing circuit 301 which is arranged inside the device body 300 and, as shown in FIG. 4, is selectively connectable with an authentication device 20 arranged in a piece of equipment, so that the authentication device 20 may establish electrical connection with the pricing circuit 301 to allow the carbon coin device 30 to carry out carbon amount computation and valuable digital token update with a trading management host device 10 at a remote site by means of the authentication device 20.

The pricing circuit 301 of the carbon coin device 30 at least comprises a processing unit 31, a memory unit 32, a communication unit 33, and a carbon computation module 34, wherein the processing unit 31 is operable to execute built-in programs and to process all sorts of data; the memory unit 32 is connected to the processing unit 31 and is operable to store programs, valuable digital token, and all sorts of data; further, the communication unit 33 is connected to the processing unit 31 and is operable to allow the carbon coin device 30 to establish online connection with the trading management host device 10 and the authentication device 20 for receiving and transmitting all sorts of instructions and data; further, the communication unit 33 may be wireless or wired connection technology, such as a Wi-Fi module, a Bluetooth module, a near field communication (NFC) module, an Ethernet module, or a combination of at least two of them; further, the carbon computation module 34 is connected to the processing unit 31, and the carbon computation module 34 is operable to conduct calculation or computation of carbon emission, according to data of the equipment, including a traveling distance, an output torque, a motor rotational speed, a moving speed, and electrical power consumption, for being stored in the memory unit 32. Further, according to some embodiments, the processing unit 31 is further connected with a power accumulation unit 35, and the power accumulation unit 35 is operable to carry out electricity transfer with respect to the authentication device 20, and the power accumulation unit 35 comprises an electricity management unit 351, at least one electricity connection port 352, and at least one electricity storage unit 353, wherein the electricity management unit 351 is operable to control input and output of electricity into and out of each electricity storage unit 353 through each electricity connection port 352, and the power accumulation unit 35 is connected to the processing unit 31 to work with the carbon computation module 34 for calculation or computation of carbon emission.

As such, a carbon coin device is provided for implementing calculation or computation of carbon emission and transmission of carbon coin trading data.

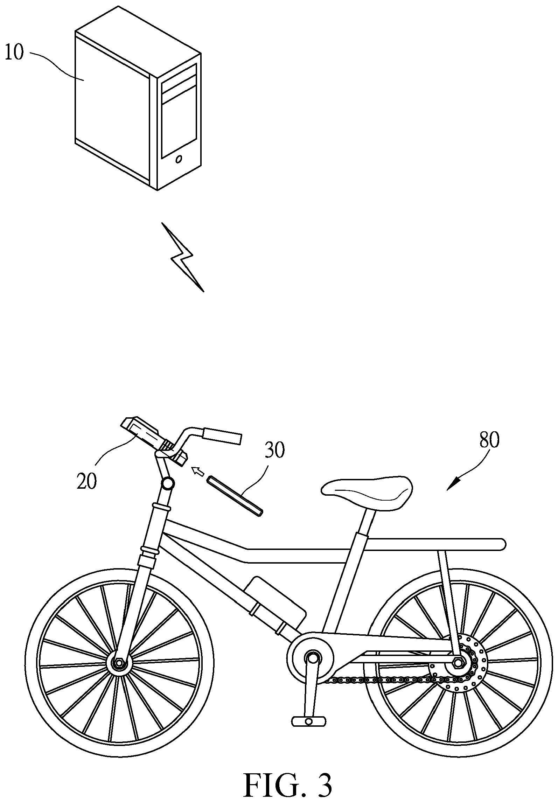

The carbon coin device 30 according to the present invention is applicable to at least one piece of equipment (such as an electrical bicycle, an electrical motorcycle, an electrical four-wheeled vehicle or non-electrically-driven mobile carriers, a mower, an electrical tool, a coffee machine, an electrical fan, or a vacuum cleaner or non-electrically-driven machinery or equipment). As shown in FIGS. 3 and 4, the carbon coin device 30 is applied to the authentication device 20 that is mounted on a bicycle 80 or a mower 90, wherein the authentication device 20 is provided with functions of detecting power consumption data of the equipment, such as a traveling distance, an output power, a motor rotational speed, a moving speed, and electrical power consumption, and the authentication device 20 selectively establishes communication connection and electrical connection with the carbon coin device 30, and further, the carbon coin device 30 and the authentication device 20 establish communication connection with the trading management host device 10 at a remote site for mutual transmission of data and information to conduct at least one operation of carbon coin trading.

A process of practically implementing the present invention can be better understood from the following embodiments, such as:

### EMBODIMENT 1: carbon coin trading of mobile carrier

As shown in FIGS. 2, 3, and 4, a bicycle 80 on which the implementation is carried out is provided with an authentication device 20 mounted thereto for connection with a carbon coin device 30, and the authentication device 20 or the carbon coin device 30 is further in mutual communication with the trading management host device 10 for transmission of instructions and data and information. To operate, firstly, when the bicycle 80 starts to advance, the authentication device 20 detects power consumption data of the vehicle after this round of operation, including, but not limited to, a traveling distance, an output power, a motor rotational speed, a moving speed, and electrical power consumption, and further, the carbon coin device 30 makes mutual connection with the authentication device 20 by means of the communication unit 33, and receives such power consumption data and generates one event of carbon coin trading; next, the carbon coin device 30, upon receiving such power consumption data, carries out calculation or computation of a first carbon emission for this round of operation of the vehicle by means of the carbon computation module 34 of the carbon coin device 30; then, the carbon coin device 30 may, by itself or by means of the authentication device 20, upload the carbon coin trading event that includes the power consumption data of the first carbon emission to the trading management host device 10; and next, the trading management host device 10, according to the data and information of the uploaded carbon coin trading event, issues, to a trader of the vehicle, inquiry for declaration of alternatives including, but not limited to, alternative solutions for a traveling schedule of the trader, and calculates a second carbon emission according to data and information of published standard carbon emission parameters; and next, the trading management host device 10 conducts calculation or computation, according to a difference between the first and second carbon emissions, in combination with other predetermined reference data, such as bonus coefficient, for a valuable digital token that the trader may be granted; and further next, the trading management host device 10 records the valuable digital token in the carbon coin trading event and update related records for subsequent operations of management; and finally, the trading management host device 10 downloads data of the valuable digital token to the carbon coin device 30 of the trader for updating, so that the trader may use the valuable digital token stored in the carbon coin device 30 to conduct a value based transaction and thus completing the entire carbon coin trading.

### EMBODIMENT 2: carbon coin trading of machinery and equipment

As shown in FIGS. 2 and 4, in an application to a mower 90, the mower 90 is set in connection with an authentication device 20, so that the carbon coin device 30 and the authentication device 20 may be connected to each other, and the authentication device 20 or the carbon coin device 30 may be further in mutual communication with the trading management host device 10 for transmission of instructions and data and information. To operate, firstly, when the mower 90 is started for operation, the authentication device 20 may detect power consumption data after the starting, including, but not limited to, the operation, and further, the carbon coin device 30 makes mutual connection with the authentication device 20 by means of the communication unit 33, and receives such power consumption data and generates one event of carbon coin trading; next, the carbon coin device 30, upon receiving such power consumption data, carries out calculation or computation of a first carbon emission of this round of operation of the equipment by means of the carbon computation module 34 of the carbon coin device 30; then, the carbon coin device 30 may, by itself or by means of the authentication device 20, upload the carbon coin trading event that includes the power consumption data of the first carbon emission to the trading management host device 10; and next, the trading management host device 10, according to the data and information of the uploaded carbon coin trading event, issues, to a trader of the equipment, inquiry for declaration of alternatives including, but not limited to, other alternative activation solutions for the mower 90 of the trader, and calculates a second carbon emission according to data and information of published standard carbon emission parameters; and next, the trading management host device 10 conducts calculation or computation, according to a difference between the first and second carbon emissions, in combination with other predetermined reference data, such as bonus coefficient, for a valuable digital token that the trader may be granted; and further next, the trading management host device 10 records the valuable digital token in the carbon coin trading event and update related records for subsequent operations of management; and finally, the trading management host device 10 downloads data of the valuable digital token to the carbon coin device 30 of the trader for updating, so that the trader may use the valuable digital token stored in the carbon coin device 30 to conduct a value based transaction and thus completing the entire carbon coin trading.

It is readily appreciated from the above description that the carbon coin device according to the present invention allows carbon coin trading to be conducted among small entities of small businesses and individual, and also allows for saving and storing of valuable digital token for conducting value-based transactions, so that incentives are provided for traders to timely and directly conduct trading for purchase and sale and small entities are thus encouraged to join carbon reduction and enjoy the benefit of carbon reduction and thus, eventually, the goal of reducing emission of greenhouse gases can be efficiently and effectively achieved, and the total carbon emission can be effectively controlled through the operation of market mechanism to thereby create economic value and improve additional value of products.

## Claims

1. A carbon coin device, which is connectable with an authentication device (20) and a trading management host device (10) to perform carbon emission calculation and carbon coin trading, the carbon coin device at least comprising:
a device body (300);
a pricing circuit (301), which is arranged in the device body (300), the pricing circuit (301) at least comprising a processing unit (31), a memory unit (32), a communication unit (33), and a carbon computation module (34), wherein the processing unit (31) is operable to execute built-in programs and to process all sorts of data; the memory unit (32) is connected to the processing unit (31) and is operable to store programs, valuable digital token, and all sorts of data; the communication unit is connected to the processing unit (31) and is operable to connect with the trading management host device (10) and the authentication device (20) for receiving and transmitting all sorts of instructions and data; and the carbon computation module (34) is connected to the processing unit (31), and the carbon computation module (34) is operable to calculate of carbon emission according to power consumption data.

2. The carbon coin device according to claim 1, wherein the processing unit (31) of the carbon coin device (30) is further connectable to an power accumulation unit (35), and the power accumulation unit (35) comprises an electricity management unit (351), at least one electricity connection port (352), and at least one electricity storage unit (353), and the electricity management unit (351) is operable to control input and output of electricity into and out of each electricity storage unit (353) through each electricity connection port (352), and the power accumulation unit (35) is connected to the processing unit (31) to work with the carbon computation module (34) for calculation of the carbon emission.

3. The carbon coin device according to claim 2, wherein the power accumulation unit (35) of the carbon coin device (30) is operable to carry out electricity transfer with respect to the authentication device (20).

4. The carbon coin device according to claim 1, wherein the communication unit (33) of the carbon coin device (30) comprises one of a Wi-Fi module, a Bluetooth module, a near field communication (NFC) module, and an Ethernet module, or a combination of at least two thereof.
